# EUROPÄISCHE PATENTSCHRIFT

(11) **EP 0 380 942 B1**
(45) Veröffentlichungstag und Bekanntmachung des Hinweises auf die Patenterteilung: **29.03.1995**
(21) Anmeldenummer: 90100583.5
(22) Anmeldetag: 12.01.1990
(51) Int. Cl.: B31F 5/00, B31B 1/62, B31B 15/00

(54) **Verfahren zum Verkleben eines mit Kunststoffolie laminierten Kartonzuschnittes, insbesondere für Klappdeckelschachteln für Cigaretten**
Glueing method for a cardboard blank laminated with a plastic film, especially for hinged-lid cigarette packages
Procédé de collage d'un carton laminé avec une feuille de matière plastique, notamment pour paquets de cigarettes à couvercle rabattant

(30) Priorität: 03.02.1989 DE 3903201
(43) Veröffentlichungstag der Anmeldung: 08.08.1990
(73) Patentinhaber: H.F. & Ph.F. Reemtsma GmbH & Co, 22605 Hamburg (DE)
(72) Erfinder: Wank, Gerhard, D-2080 Pinneberg (DE); Winter, Berthold, D-2000 Hamburg 62 (DE)
(74) Vertreter: UEXKÜLL & STOLBERG

(56) Entgegenhaltungen:
- DE-A- 1 043 785
- DE-A- 2 844 238
- DE-A- 3 716 715
- GB-A- 1 001 924
- GB-A- 2 093 739
- US-A- 2 474 775
- US-A- 4 007 671

## Beschreibung

Die Erfindung betrifft ein Verfahren zum Verkleben eines mit einer Kunststoffolie auf der Dekor- oder Außenfläche laminierten Kartonzuschnittes, insbesondere für Hinge-Lid- bzw. Klappdeckelschachteln für Cigaretten auf einer kontinuierlich betriebenen Packmaschine.

Es ist allgemein bekannt, Klappdeckelschachteln für Cigaretten auf einer kontinuierlich betriebenen Packmaschine nach oder im Bereich der Faltstation in den zu verklebenden Bereichen mit einem Klebstoff zu versehen und die zu verklebenden Bereiche zusammenzupressen.

Als Klebstoff wird in der Regel ein heißschmelzender Klebstoff oder ein Kaltleim verwendet. Um ein besseres Anhaften der zu verklebenden Bereiche zu ermöglichen, wird bei üblichen bedruckten Kartonzuschnitten der zu verklebende Bereich, d.h. der Bereich der Seitenlappen und Deckelecklappen nicht bedruckt, um eine bessere Haftung zu ermöglichen.

Werden jedoch mit Kunststoffolien laminierte Kartonzuschnitte verwendet, können die zu verklebenden Bereiche auf der Dekorseite nicht von der Laminierung ausgenommen werden, da Kunststoffolien und Kartonbahn als einheitliches Flächenmaterial laminiert werden. Die üblicherweise für Cigarettenschachteln verwendeten Heißkleber haften jedoch nicht hinreichend auf solchen mit Kunststoffolie laminierten Dekor- oder Außenflächen, was bei höheren Lagertemperaturen, z.B. im Sommer, zu einer Loslösung der verklebten Bereiche, sei es bei den Seitenlappen oder Deckelecklappen, fuhrt. Die Verwendung von anderen Klebmassen, sogenannten Schnellklebern oder Sekundenklebern, ist aus lebensmittelrechtlichen Gründen nicht zulässig.

Darüber hinaus ist die Verklebung solcher Schachteln mit abgeschrägten Längskanten, z.B. gemäß EP-A1-0 204 933 besonders kritisch, weil die im Querschnitt achteckigen oder in den Seitenbereichen abgerundeten Schachteln weniger Klebfläche zur Verfügung stellen und weil derartige Klappdeckelschachteln bei seitlichem Druck, z.B. in der Tasche des Verbrauchers, größeren Belastungen ausgesetzt sind.

Die GB-A-1 001 924 offenbart ein Verfahren zum Verbinden von Formularen entlang deren Seitenränder, wobei in einem ersten Schritt jede Papierbahn über eine Stützwalze geführt und von einem Schneidköpfe tragenden Rad mit Perforationen versehen wird. Anschließend zerreißt ein Prägerad die Papierbahn entlang der Perforationslinie, so daß Riffelungen entstehen. Zwischen die beiden Bahnen wird anschließend Klebstoff eingebracht und die Papierbahnen werden im Bereich ihrer Randzonen mit verhältnismäßig hoher Geschwindigkeit miteinander verklebt.

Aus der DE-A-28 44 238 sind ein Verfahren und ein Werkzeug zum Herstellen einer Aufreißlinie in eine Laminatfolie bekannt, die aus einer Polyesterschicht, einer Aluminiumfolie und einer Polyethelenschicht besteht. Das dabei verwendete Werkzeug, ein bewegbarer Stempel mit einer angeschärften bzw. verjüngten Druckkante, wird auf etwa 150°C erwärmt und drückt die Polyesterschicht gegen einen Gegenhalter, der mit seiner Erhöhung einen Gegendruck erzeugt und dadurch die untere Polyethelenschicht verformt. Die Verformung geht jedoch nicht so weit, daß die Polyethelenschicht durchtrennt wird.

Aus der US-A-4,007,671 ist eine Nadelwalze zum Vergrößern der Oberfläche eines Kartonzuschnitts bekannt, mit der im Kartonzuschnitt Vertiefungen für die Aufnahme und Verbindung von Klebstoff geschaffen werden sollen. Dabei geht es nicht um das Durchtrennen einer Beschichtung und es ist auch keine Erwärmung der Nadeln vorgesehen.

Die Erfindung hat sich daher die Aufgabe gestellt, ein Klebverfahren vorzuschlagen, um mit Kunststoffolie laminierte Kartonzuschnitte für Klappdeckelschachteln und vornehmlich für Klappdeckelschachteln mit abgerundeten oder abgeschrägten Längskanten mit einem üblichen Heißkleber dauerhaft und temperaturbeständig zu verkleben.

Zur Lösung dieser Aufgabe wird daher ein Verfahren gemäß Patentanspruch 1 vorgeschlagen, wobei besondere Ausführungsformen in den Unteransprüchen 1 bis 5 aufgeführt sind.

Im folgenden soll die Erfindung anhand von Zeichnungen näher erläutert werden; es zeigen:
- Figur 1: eine schematische Darstellung einer Cigaretten-Verpackungsmaschine,
- Figur 2: eine perspektivische Unteransicht des zur Durchführung des erfindungsgemäßen Verfahrens verwendeten Werkzeuges,
- Figur 3: eine perspektivische Teilansicht der Arbeitsfläche des Werkzeuges und,
- Figur 4: einen Ausschnitt eines erfindungsgemäß behandelten Seitenlappens.

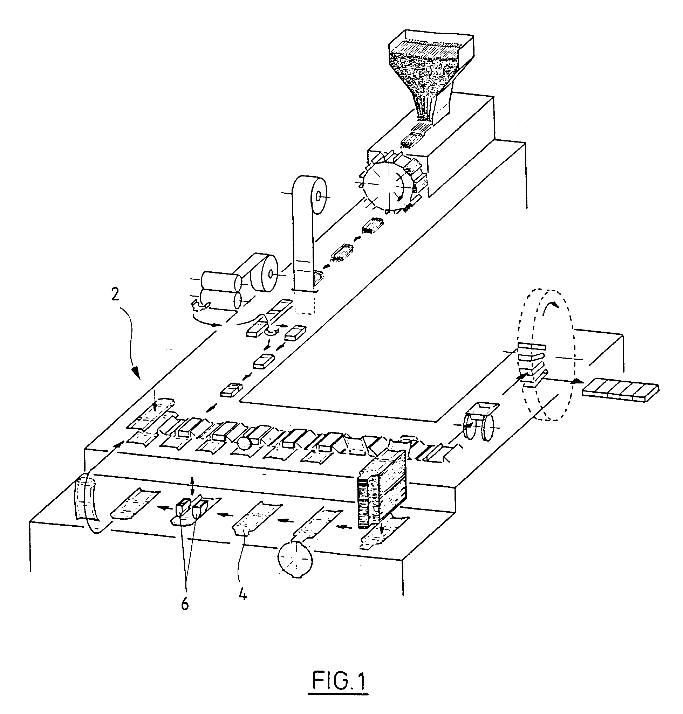

Figur 1 zeigt die perspektivische Ansicht einer Packmaschine 2, bei der von einem Stapel Zuschnitte 4 einer Faltstation zugeführt werden, wobei die bereits in Aluminiumfolie eingehüllten Cigaretten blockartig auf den vorgefalteten Zuschnitt gefördert werden. Am Ende der Faltstation oder nach dieser wird auf die zu verklebenden Bereiche, nämlich auf die Seiten- und Ecklappen Klebstoff aufgetragen und die Schachtel in eine Trockentrommel geführt und aus diese nach Zusammendrücken der verklebten Bereiche abgegeben.

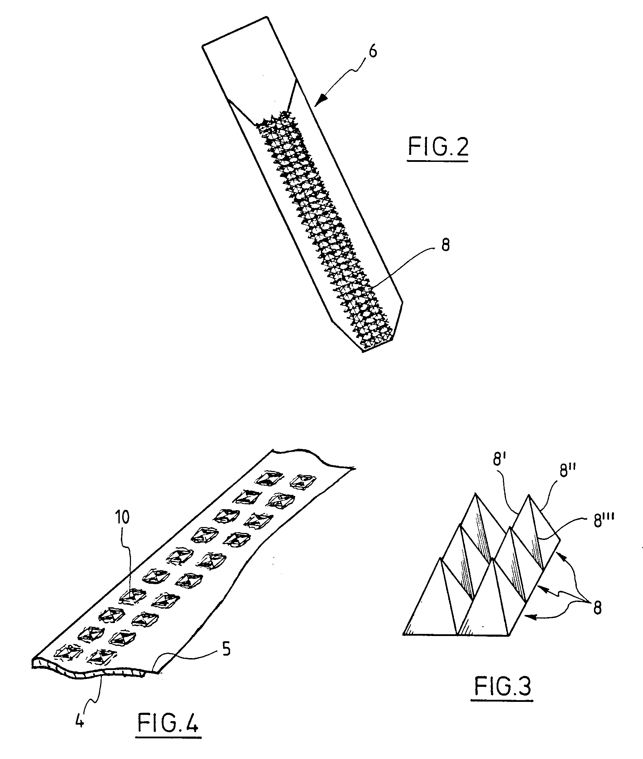

Bei dem erfindungsgemäßen Verfahren werden die Zuschnitte 4 von dem in Figur 2 gezeigten Werkzeug 6 durch an diesem Werkzeug 6 angebrachte Spitzen 8 geschädigt. Hierbei bilden sich, wie in Figur 4 gezeigt, kraterartige etwa 0,2 bis 1,0 mm breite Vertiefungen in der aufkaschierten Kunststoffolie 5, die auch noch in das Kartonmaterial 4 hineinreichen. Durch die Erwärmung des Werkzeuges 6 auf Temperaturen von 150 bis 400° und vorzugsweise etwa 300°C wird der Kunststoff zum Verschmelzen gebracht und die je nach Kartonstärke etwa 0,5 bis 1,5 mm eindringenden Spitzen erzeugen im Karton eine Vertiefung, in die der aufgebrachte Klebstoff eindringen kann.

Die Spitzen 8 auf dem Werkzeug 6 können in mehreren Reihen, beispielsweise in vier Reihen, mit einem Spitzenabstand von etwa 2 bis 3 mm angeordnet sein. Die Spitzen können kegelförmig ausgebildet sein, sind jedoch vorzugsweise, wie in Figur 3 gezeigt, pyramidenförmig und besitzen Schneidkanten 8′ bzw. 8˝ bzw. 8‴. Die Grundfläche der Pyramide kann dreieckig, viereckig oder mehreckig sein; sie ist vorzugsweise viereckig.

Nach Auftrag des heißen Schmelzklebers wird die dann aufgelegte Unterseite des Kartonzuschnitts angedrückt bzw. verpreßt.

Bei einer bevorzugten Ausführungsform wird der Heißkleber nur am äußeren Randbereich der beschädigten Seitenlappen aufgebracht, während im benachbarten, nach innen gerichteten Bereich der Seitenlappen ein Kaltleim aufgebracht werden kann. Dieses hat den Vorteil, daß man nur eine geringe Breite, und zwar die äußeren, bei Wärmebelastungen leichter aufspringenden Außenbereiche, mit Heißkleber beschichtet, während der bereits in seiner Lage gehaltene innere Bereich des Lappens durch einen normalen Kaltleim verklebt wird. Als Heißkleber können übliche marktgängige Sorten verwendet werden. Die Zuschnitte bestehen je nach Wunsch aus 200 bis 500 und vorzugsweise 275 g/m² Karton, der mit einer 10 bis 20 und vorzugsweise 15 »m dicken Folie aus Polyethylen, Polypropylen oder eine Acetatfolie laminiert ist.

## Patentansprüche

1. Verfahren zum Verkleben eines mit einer Kunststoffolie auf der Dekor- oder Außenfläche laminierten Kartonzuschnittes für Cigaretten-Klappdeckelschachteln auf einer kontinuierlich betriebenen Packmaschine, **dadurch gekennzeichnet**, daß man die Kunststoffolie (5) und einen Teilbereich des unter dieser befindlichen Kartonmaterials (4) mit auf 150 bis 400°C erhitzten pyramiden förmigen, Schneidkanten (8', 8'', 8''') aufweisenden, 1 bis 5 mm hohen, in mehreren Reihen nebeneinander liegenden Spitzen (8) eines Werkzeuges (6) im Bereich oder Teilbereich der zu verklebenden Kartonbereiche zerstört und anschließend auf die derart mit kraterartig und in den Karton hineinreichenden Vertiefungen (10) beschädigte Folienoberfläche einen Klebstoff aufbringt und mit der Unterseite der zu verklebenden Bereiche des Kartonzuschnittes zusammendrückt.

2. Verfahren nach Anspruch 1, **dadurch gekennzeichnet**, daß man die Kunststoffolie (5) und das darunter befindliche Kartonmaterial im Bereich der Seitenlappen oder Deckelecklappen des Klappdeckelschachtelzuschnitts vollständig oder bereichsweise schädigt.

3. Verfahren nach Anspruch 1 und 2, **dadurch gekennzeichnet**, daß man auf die derart kraterartig beschädigte Folienoberfläche einen Heißschmelzkleber aufbringt.

4. Verfahren nach Anspruch 3, **dadurch gekennzeichnet**, daß man den Heißkleber nur im äußeren Randbereich der beschädigten Lappen aufbringt und im benachbarten Bereich einen Kaltleim aufbringt.

5. Verfahren nach Anspruch 4, **dadurch gekennzeichnet**, daß man kraterartige Beschädigungen (10) mit einem Innendurchmesser oder Innenabstand von 1,5 bis 4 mm erzeugt.

## Claims

1. A method on a continuously operated packaging machine, of gluing a cardboard blank for cigarette fliptop packs, which is laminated to a plastics foil on the decorative or outer face, **characterized in that**
in the region or part region of the regions of the cardboard which are to be glued one destroys the plastics foil (5) and a part region of the cardboard material (4) lying below it by sharp points (8) on a tool (6), in the form of pyramids 1 to 5 mm high lying side by side in a number of rows and exhibiting cutting edges (8', 8'', 8'''), being heated to 150 to 400°C, and then to the surface of the foil which has thus been injured with depressions (10) like craters reaching into the cardboard, one applies an adhesive and presses it together with the underside of the regions of the cardboard blank which are to be glued.

2. A method as in Claim 1, **characterized in that**
the plastics foil (5) and the cardboard material lying below it in the region of the sidetabs or lid corner tabs of the fliptop pack blank are injured completely or in some regions.

3. A method as in Claim 1 and 2, **characterized in that**
a high-melting-point glue is applied to the surface of the foil which has been injured in that way like craters.

4. A method as in Claim 3, **characterized in that**
the hot glue is applied only to the outer edge region of the injured tabs and in the adjoining region a cold glue is applied.

5. A method as in Claim 4, **characterized in that**
injuries (10) like craters are generated with an internal diameter or internal spacing of 1.5 to 4 mm.

## Revendications

1. Procédé de collage d'un flanc en carton laminé, avec une feuille de matière plastique, sur la surface de décoration ou extérieure, pour des paquets de cigarettes à couvercle rabattant, sur une machine d'emballage fonctionnant en continu, caractérisé en ce que la feuille de matière plastique (5) et une zone partielle du matériau en carton (4) se trouvant sous celle-ci sont détruites dans la zone ou une zone partielle des zones en carton à coller, à l'aide de pointes (8) à forme pyramidale, présentant des arêtes de coupe (8', 8'', 8'''), ayant une hauteur de 1 à 5 mm, et situées les unes à côté des autres en plusieurs rangées et chauffées à une température de 150 à 400°C, puis un adhésif est appliqué sur la surface de feuille endommagée de cette manière avec des cavités (10) en forme de cratère et arrivant jusque dans le carton et l'on comprime avec la face inférieure des zones à coller du flanc en carton.

2. Procédé selon la revendication 1, caractérisé en ce que l'on cause, en totalité ou par zones, des dégâts à la feuille de matière plastique (5) et au matériau en carton se trouvant dessous, dans la zone des languettes latérales ou des languettes d'angle du couvercle du flanc du paquet à couvercle rabattant.

3. Procédé selon les revendications 1 et 2, caractérisé en ce que l'on applique un adhésif fondant à chaud sur la surface de feuille où l'on a causé de cette manière des dégâts en cratères.

4. Procédé selon la revendication 3, caractérisé en ce que l'on applique l'adhésif fondant à chaud seulement sur la zone marginale extérieure des languettes endommagées et l'on applique une colle à froid dans la zone voisine.

5. Procédé selon la revendication 4, caractérisé en ce que l'on produit des petits dégâts en cratères (10) d'un diamètre intérieur ou un espacement intérieur de 1,5 à 4 mm.
